# DEMANDE DE BREVET EUROPEEN

(11) **EP 0 685 285 A1**
(43) Date de publication de la demande: **06.12.1995**
(21) Numéro de dépôt: 95401255.5
(22) Date de dépôt: 31.05.1995
(51) Int. Cl.: B23H 3/00, B23H 3/02, G01B 17/02

(54) **Machine d'usinage électrochimique et procédé correspondant**

(30) Priorité: 02.06.1994 FR 9406739
(71) Demandeur: SOCIETE NATIONALE D'ETUDE ET DE CONSTRUCTION DE MOTEURS D'AVIATION, "S.N.E.C.M.A.", F-75015 Paris (FR)
(72) Inventeur: Bonneau, Raymond, F-91000 Evry (FR); Rosiau, Gérard, André, René, F-91540 Mennecy (FR)

(57) **Abrégé**

La machine d'usinage électrochimique modifiée selon l'invention est complétée par un capteur d'épaisseur 18, par exemple à ultrasons, et une boucle comprenant un dispositif mesureur d'épaisseur 22 et un relais 24 qui bascule dès que l'épaisseur recherchée est atteinte, ce qui coupe l'alimentation électrique de la machine 10. On n'a donc plus à surveiller périodiquement l'évolution de l'épaisseur de la pièce.

## Description

L'invention se rapporte à une machine d'usinage électrochimique et à un procédé correspondant.

Les procédés d'usinage électrochimique, dans lesquels une face à usiner d'une pièce baigne dans un électrolyte qui la relie à une électrode, un courant électrique étant instauré entre l'électrode et la pièce pour faire du système une pile dont la pièce constitue l'anode, sont bien connus, et des machines appropriées à ces procédés sont facilement disponibles. On ne dispose cependant pas de moyens intrinsèques à la machine pour mesurer l'évolution de l'usinage, contrairement aux procédés à outil coupant où la profondeur de passe de l'outil fournit cette indication. On doit donc assurer une surveillance constante ou du moins assidue accompagnée de mesures d'épaisseur périodiques. Cela est fastidieux et on doit souvent interrompre le procédé pendant les mesures.

L'invention permet d'échapper à ces inconvénients et d'arrêter automatiquement l'usinage électrochimique quand l'épaisseur souhaitée pour la pièce est atteinte.

La nouvelle machine d'usinage électrochimique qui satisfait à cette exigence comprend un capteur d'épaisseur devant une face de la pièce opposée à l'outil d'usinage chimique, c'est-à-dire à l'enceinte qui contient l'électrolyte, et ce capteur est relié à un moyen d'arrêt de la machine. Sa mesure est continue.

D'autres particularités de l'invention seront maintenant décrites plus en détail à l'aide d'une réalisation illustrative et non limitative de celle-ci :
- la figure 1 représente un schéma général du système,
- les figures 2, 3 et 4 représentent plus en détail le système de maintien du capteur, et
- la figure 5 est une esquisse du schéma électrique.

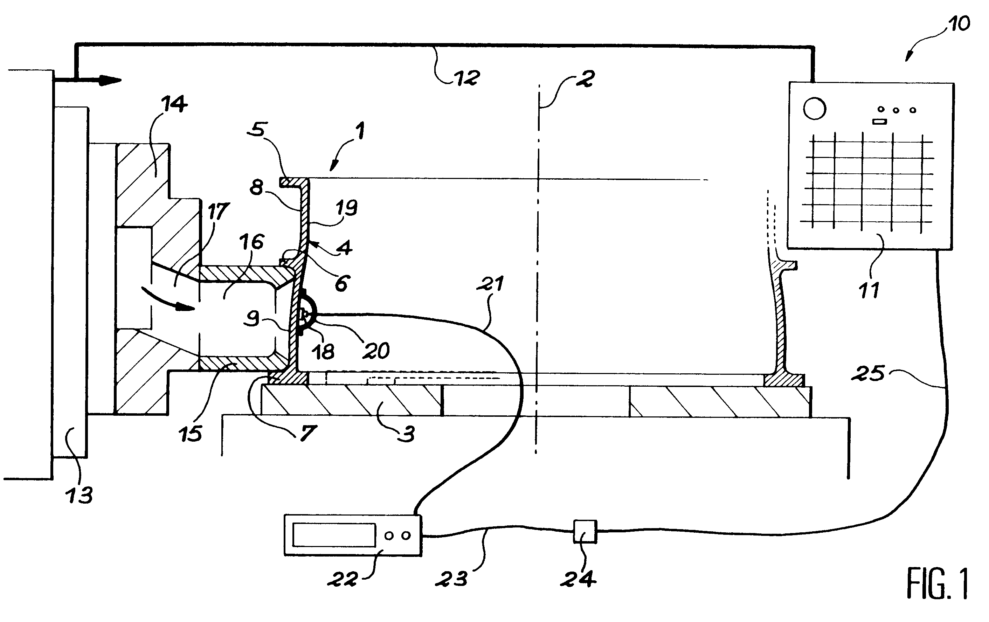

La pièce usinée à la figure 1 est une roue de turbine 1, qui est une pièce circulaire autour d'un axe 2 vertical et posée sur un gabarit 3 de mise en position. La roue de turbine 1 comprend une paroi 4 verticale et cylindrique sensiblement, de la face extérieure de laquelle trois collerettes horizontales, successivement 5, 6 et 7, dépassent pour y séparer deux surfaces extérieures à usiner 8 et 9. La première (8) s'étend entre les collerettes 5 et 6, et l'autre (9) s'étend sous la précédente, entre les collerettes 6 et 7.

Une machine d'usinage électrochimique 10 se compose essentiellement d'un boîtier de commande 11 relié par des lignes électriques 12 et d'alimentation de fluide à un porte-cathode 13, sur lequel une cathode 14 est disposée, et d'une ventouse 15 en matériau souple qui délimite une chambre 16 dont l'ouverture est appuyée sur une des surfaces à usiner 8 et 9. Le passage de l'électrolyte dans la chambre 16 est assuré par un conduit 17 qui traverse le porte-cathode 13, la cathode 14 et la face arrière de la ventouse 15.

Un capteur d'épaisseur 18 est posé derrière la surface 9 actuellement objet de l'attaque chimique, et plus précisément à l'opposé de celle-ci, sur la face intérieure 19 de la paroi 4. Le capteur d'épaisseur 18 est relié à une ventouse 20 qui est collée sur la face intérieure 19 et assure donc à elle seule la fixation tout en maintenant le capteur d'épaisseur 18 sur la face intérieure 19. Un câble 21 relie le capteur d'épaisseur 18 à un mesureur 22, qui consiste en un convertisseur de l'intensité du signal électrique délivré par le capteur d'épaisseur 18 en indications chiffrées. Le mesureur 22 est classique, mais il est prolongé par un câble 23, relié au câble 21 directement ou par l'intermédiaire d'un amplificateur, et qui aboutit à un relais 24 communiquant avec le boîtier 11 par un dernier câble 25. Le relais 24 commande l'arrêt de la machine 10 dès que le signal délivré par le capteur d'épaisseur 18 à travers les câbles 21, 23 et 25 atteint une valeur déterminée, représentative d'une épaisseur de la roue de turbine 1 entre les faces 9 et 19 sous laquelle on ne veut pas descendre. La machine 10 peut être arrêtée en coupant le courant qui l'alimente, ce qui est la solution la plus simple, ou en coupant le courant du circuit qui met la cathode 14 à son potentiel de service.

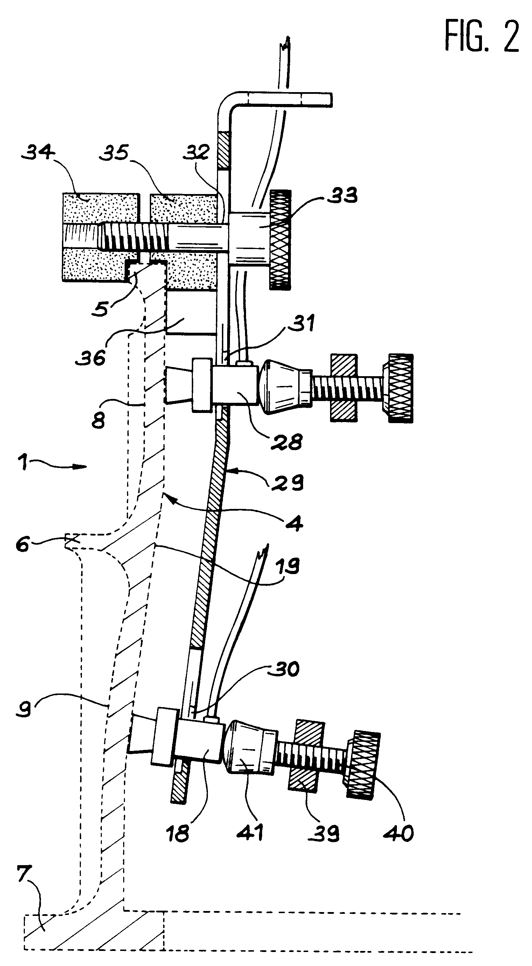

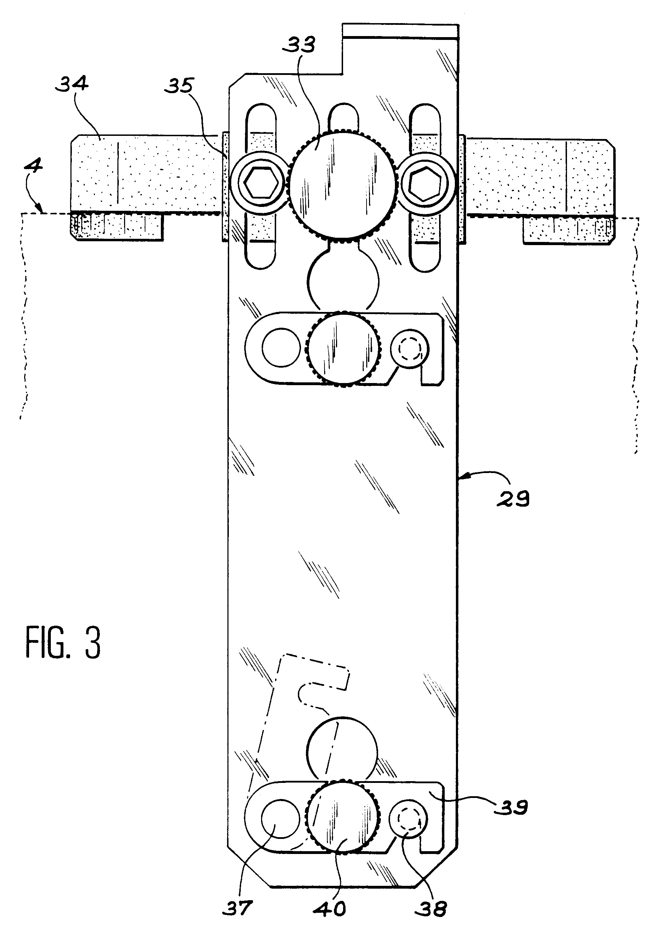

Les figures 2, 3 et 4 représentent un autre mode de réalisation, prévu pour la même pièce et l'usinage consécutif des deux surfaces à usiner 8 et 9. Au capteur 18 est adjoint un autre capteur semblable à lui, noté 28 qui le surplombe et est situé à l'opposé de la surface à usiner 8 supérieure. Les capteurs 18 et 28 sont reliés entre eux par une lame 29, percée de deux trous 30 et 31 au travers desquels ils s'étendent respectivement tout en pouvant coulisser. Un troisième trou 32 de la lame 29 est traversé par la tige 33 de serrage de deux mors 34 et 35 qui pincent la roue de turbine 1 à l'endroit de la collerette 5 supérieure. Dans ces conditions, la lame 29 est fermement maintenue en place à quelque distance de la face intérieure 9, en fonction de l'épaisseur du mors 35 et plus précisément d'un prolongement 36 de celui-ci, qui sert de cale entre la face intérieure 19 et la lame 29.

Il reste à mentionner comment les capteurs 18 et 28 sont repoussés contre la face intérieure 19 pour accomplir leur tâche de mesure. De la face intérieure de la lame 29 s'élèvent des arceaux composés chacun de deux goujons parallèles 37 et 38 et d'une plaque 39 qui les unit. Cette plaque 39 porte un taraudage dans lequel est engagée une vis 40, dirigée vers le trou 31 associé et terminée par un tampon 41 en forme de bouchon qui vient presser contre l'arrière des capteurs 18 ou 28 respectifs.

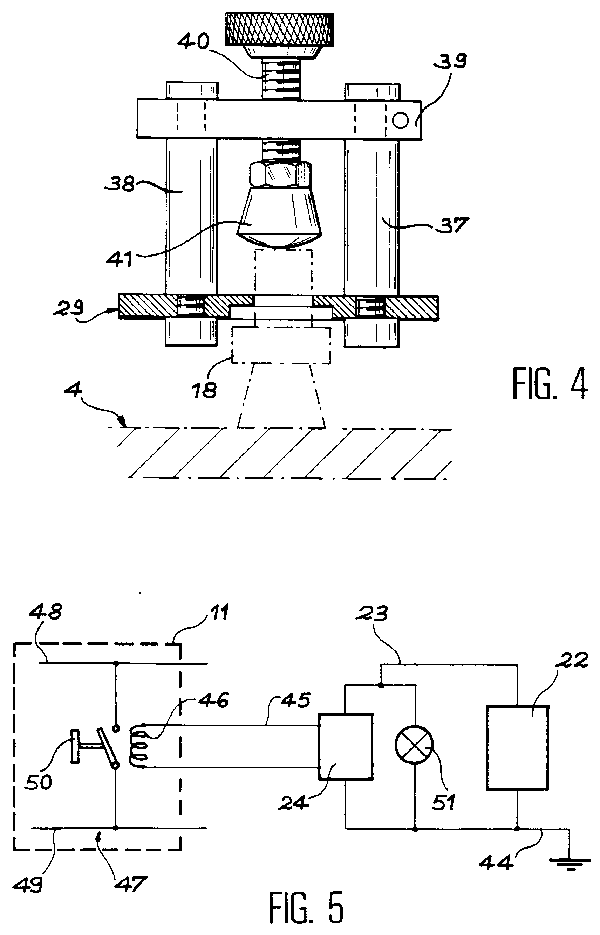

On va maintenant décrire la figure 5 et le montage électrique utilisé pour le capteur d'épaisseur 18 ; celui du capteur d'épaisseur 28 serait semblable.

Le mesureur 22 et le relais 24 ont leurs bornes actives reliées par le câble 23, mais sont également reliées à une ligne de terre 44. Quand la tension sur la ligne 23 créée par le capteur 18 et le mesureur 22 le permet, le relais 24, qui est un dispositif monostable à seuil de déclenchement, fait circuler du courant dans une boucle 45 qui comprend un solénoïde 46 de commande d'un relais d'interruption 47 qui unit des lignes d'alimentation 48 et 49 dans le boîtier 11. Un bouton 50 permet d'enclencher à nouveau le relais d'interruption 47 quand la situation le permet. Enfin, un voyant 51 est mis en parallèle au relais 24. Il est allumé quand l'usinage continue et s'éteint dès que la machine 10 est arrêtée.

Le système de l'invention est donc simple et pratique. Les essais ont également montré qu'il était précis, car l'électrolyte présent derrière la paroi verticale 4 ne perturbe que peu la mesure de son épaisseur par les capteurs 18 et 28.

Les capteurs 18 et 28 sont des capteurs à ultrasons dans les réalisations précédentes, mais ils pourraient certainement être remplacés par d'autres.

## Revendications

1. Machine (1) d'usinage électrochimique comprenant un outil d'usinage (13 à 17) devant une face d'une pièce, caractérisée en ce qu'elle comprend un capteur d'épaisseur (18) devant une face opposée à l'outil de la pièce, relié (21 à 25) à un moyen d'arrêt (24, 46) de la machine.

2. Machine selon la revendication 1, où le capteur est un capteur à ultrasons.

3. Machine selon la revendication 1 ou 2, où le capteur est dans une ventouse (20) appuyée sur la face opposée de la pièce.

4. Machine selon la revendication 1 ou 2, caractérisée en ce que le capteur est monté coulissant en direction de la face opposée de la pièce sur une structure de montage (29) attachée à la pièce.

5. Machine selon l'une quelconque des revendications 1 à 4, caractérisée en ce que le moyen d'arrêt de la machine comprend un dispositif électrique à seuil de déclenchement (24) qui commande (46) un interrupteur (47) de la machine.

6. Procédé d'usinage électrochimique accompli par une machine selon l'une quelconque des revendications précédentes, caractérisé en ce que l'usinage est interrompu en coupant un courant électrique dans la machine quand le capteur (18) détecte que l'épaisseur de la pièce atteint une valeur déterminée.
